# EUROPEAN PATENT APPLICATION

(11) **EP 4 672 295 A1**
(43) Date of publication of application: **31.12.2025**
(21) Application number: 23923626.8
(22) Date of filing: 12.07.2023
(51) Int. Cl.: H01J 23/34

(54) **CONTROL CIRCUIT AND MICROWAVE GENERATION DEVICE**

(30) Priority: 23.02.2023 CN 202310161336
(71) Applicant: Guangdong Witol Vacuum Electronic Manufacture Co., Ltd, Foshan, Guangdong 528311 (CN); Guangdong Midea Kitchen Appliances Manufacturing Co., Ltd., Foshan, Guangdong 528311 (CN)
(72) Inventor: LIU, Xinghua, Foshan, Guangdong 528311 (CN); CHENG, Yan, Foshan, Guangdong 528311 (CN); LI, Qinghai, Foshan, Guangdong 528311 (CN); WANG, Fubao, Foshan, Guangdong 528311 (CN); GAO, Wei, Foshan, Guangdong 528311 (CN); XU, Xiaoping, Foshan, Guangdong 528311 (CN); CHEN, Fei, Foshan, Guangdong 528311 (CN)
(74) Representative: Ran, Handong
(86) International application number: PCT/CN2023/107036
(87) International publication number: WO 2024/174458

(57) **Abstract**

Provided are a control circuit (100) and a microwave generation device (200). The control circuit (100) is applied to the microwave generation device (200) including a magnetron (36). The control circuit (100) includes a transformer assembly (12) and a switch portion (20). The transformer assembly (12) includes a primary winding (14), a first secondary winding (16), and a second secondary winding (18). The primary winding (14) is located at a primary side of the transformer assembly (12). The first secondary winding (16) and the second secondary winding (18) are located at a secondary side of the transformer assembly (12). The first secondary winding (16) and a cathode (37) of the magnetron (36) form a filament circuit (26). The switch portion (20) includes a switch member (22) and a control member (24). The switch member (22) is located in the filament circuit (26). The control member (24) is electrically connected to a control winding (19) and configured to control the switch member (22) to turn off or turn on the filament circuit (26) when a current in the control winding (19) changes. The control winding (19) is one of windings of the transformer assembly (12), and the control winding (19) and an anode (38) of the magnetron (36) form an anode circuit (27).

## Description

### CROSS-REFERENCE TO RELATED APPLICATION

This application claims priority to and benefits of Chinese patent application No. 202310161336.5, filed with China National Intellectual Property Administration on February 23, 2023, the entire content of which incorporated herein by reference.

### FIELD

The present disclosure relates to the field of microwave technologies, and more particularly, to a control circuit and a microwave generation device.

### BACKGROUND

Electrons in a cathode of a magnetron interact between a stationary magnetic field and an electric field that are vertical to each other, to convert electric energy into electromagnetic energy. A transformer is used to convert the electric energy into a form of electric energy required by a cathode filament and an anode of the magnetron. Secondary winding output of the transformer usually consists of two parts. One part is a high voltage of about 4KV from the anode of the magnetron to the ground, which allows the electric field to be generated in the magnetron. The other part is a voltage of about 3.3 V of the cathode (filament), which can continuously emit electrons after the cathode is powered on and heated by a variable-frequency drive.

In the related art, no matter what kind of transformer is used, it is a passive device. An anode voltage and a filament voltage outputted to the magnetron from a secondary side of the transformer are determined by a primary side voltage and a coil turn ratio. After the magnetron starts up, the filament voltage remains at about 3.3 V or decreases with decrease of output power. When operating for a long time without reducing power, the filament overheats due to constant power supply, which aggravates evaporation of materials, resulting in a degradation of quality and a shortened service life of the filament. Also, continuous power supply also consumes electric energy, reducing an operation efficiency of magnetic control.

### SUMMARY

Embodiments of the present disclosure provide a control circuit and a microwave generation device.

A control circuit according to the embodiments of the present disclosure is applied to a microwave generation device including a magnetron. The control circuit includes: a transformer assembly including a primary winding, a first secondary winding, and a second secondary winding, the primary winding being located at a primary side of the transformer assembly, the first secondary winding and the second secondary winding being located at a secondary side of the transformer assembly, the first secondary winding and a cathode of the magnetron forming a filament circuit; and a switch portion including a switch member and a control member, the switch member being located in the filament circuit, the control member being electrically connected to a control winding and configured to control the switch member to turn off or turn on the filament circuit when a current in the control winding changes, and the control winding being one of windings of the transformer assembly, and the control winding and an anode of the magnetron forming an anode circuit.

With the above control circuit, the control member can control the switch member to turn off the filament circuit with the switch portion, in such a manner that the cathode of the magnetron can be powered off after enough electrons are generated through powering on. Therefore, the magnetron can enable the cathode to continue to generate the electrons through a back-bombardment characteristic. In this way, the magnetron can continue to operate, which is beneficial to realizing an effect of separately turning on and turning off the cathode of the magnetron, ensuring operation quality and a service life of the magnetron.

In some embodiments, the control winding includes the second secondary winding. The control member is configured to control the switch member to turn off the filament circuit when a current starts to pass through the second secondary winding resulting in a change in the current. The control member is configured to control the switch member to turn on the filament circuit when a current stops passing through the second secondary winding resulting in a change in the current.

In this way, the filament circuit can be separately controlled to be turned on or turned off by the switch member.

In some embodiments, the current starts to pass through the second secondary winding when the cathode of the magnetron has a temperature greater than or equal to a first predetermined temperature. The current stops passing through the second secondary winding when the cathode of the magnetron has the temperature less than or equal to a second predetermined temperature. The second predetermined temperature is less than or equal to the first predetermined temperature.

In this way, self-feedback adjustment to the temperature of the cathode of the magnetron can be achieved.

In some embodiments, the control winding includes an auxiliary winding located at the primary side of the transformer assembly. The current passes through the auxiliary winding synchronously resulting in a change in the current when the primary winding is powered on. The control member is configured to control the switch member to turn on the filament circuit within a predetermined time length, and control the switch member to turn off the filament circuit after the predetermined time length when the current starts to pass through the auxiliary winding resulting in a change in the current.

In this way, the filament circuit can be avoided to be powered on for a long time, which leads to high temperature, affecting the service life of the magnetron.

In some embodiments, the control circuit includes a rectifier module electrically connected to the second secondary winding and the anode of the magnetron and configured to provide a direct current voltage to the magnetron.

In this way, an alternating voltage formed by the second secondary winding can be converted into a direct current voltage.

A microwave generation device according to the embodiments of the present disclosure includes a magnetron, and a control circuit. The control circuit includes: a transformer assembly including a primary winding, a first secondary winding, and a second secondary winding, the primary winding being located at a primary side of the transformer assembly, the first secondary winding and the second secondary winding being located at a secondary side of the transformer assembly, the first secondary winding and a cathode of the magnetron forming a filament circuit; and a switch portion including a switch member and a control member, the switch member being located in the filament circuit, the control member being electrically connected to a control winding and configured to control the switch member to turn off or turn on the filament circuit when a current in the control winding changes, and the control winding being one of windings of the transformer assembly, and the control winding and an anode of the magnetron forming an anode circuit.

With the above microwave generation device, the control member can control the switch member to turn off the filament circuit with the switch portion, in such a manner that the cathode of the magnetron can be powered off after enough electrons are generated through powering on. Therefore, the magnetron can enable the cathode to continue to generate the electrons through the back-bombardment characteristic. In this way, the magnetron can continue to operate, which is beneficial to realizing the effect of separately turning on and turning off the cathode of the magnetron, ensuring the operation quality and the service life of the magnetron.

In some embodiments, the control winding includes the second secondary winding. The control member is configured to control the switch member to turn off the filament circuit when a current starts to pass through the second secondary winding resulting in a change in the current. The control member is configured to control the switch member to turn on the filament circuit when a current stops passing through the second secondary winding resulting in a change in the current.

In this way, the filament circuit can be separately controlled to be turned on or turned off by the switch member.

In some embodiments, the current starts to pass through the second secondary winding when the cathode of the magnetron has a temperature greater than or equal to a first predetermined temperature. The current stops passing through the second secondary winding when the cathode of the magnetron has the temperature less than or equal to a second predetermined temperature. The second predetermined temperature is less than or equal to the first predetermined temperature.

In this way, the self-feedback adjustment to the temperature of the cathode of the magnetron can be achieved.

In some embodiments, the control winding includes an auxiliary winding located at the primary side of the transformer assembly. The current passes through the auxiliary winding synchronously resulting in a change in the current when the primary winding is powered on. The control member is configured to control the switch member to turn on the filament circuit within a predetermined time length, and control the switch member to turn off the filament circuit after the predetermined time length when the current starts to pass through the auxiliary winding resulting in a change in the current.

In this way, the filament circuit can be avoided to be powered on for a long time, which leads to high temperature, affecting the service life of the magnetron.

In some embodiments, the control circuit includes a rectifier module electrically connected to the second secondary winding and the anode of the magnetron and configured to provide a direct current voltage to the magnetron.

In this way, the alternating voltage formed by the second secondary winding can be converted into the direct current voltage.

Additional aspects and advantages of the present disclosure will be provided in part in the following description, or will become apparent in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 a schematic diagram showing a circuit connection of a microwave generation device according to embodiments of the present disclosure.
FIG. 2 is a schematic diagram showing operation of a control circuit according to embodiments of the present disclosure.
FIG. 3 is another schematic diagram showing a circuit connection of a microwave generation device according to embodiments of the present disclosure.

Description of main element symbols:
100, control circuit; 12, transformer assembly; 13, power supply; 14, primary winding; 16, first secondary winding; 18, second secondary winding; 19, control winding; 20, switch portion; 22, switch member; 24, control member; 26, filament circuit; 27, anode circuit; 28, first end; 30, second end; 32, rectifier module; 34, auxiliary winding;
200, microwave generation device; 36, magnetron; 37, cathode; 38, anode.

### DETAILED DESCRIPTION OF THE EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

In the description of the present disclosure, the terms "first" and "second" are only used for descriptive purposes, and cannot be understood as indicating or implying relative importance or implicitly indicating the number of indicated technical features. Therefore, the features associated with "first" and "second" may explicitly or implicitly include one or more features. In the description of the present disclosure, "a plurality of" means two or more, unless specified otherwise.

In the description of the present disclosure, it should be noted that, unless otherwise clearly specified and limited, terms such as "install", "connect", "connect to", and the like should be understood in a broad sense. For example, it may be a fixed connection or a detachable connection or connection as one piece; mechanical connection or electrical connection; direct connection or indirect connection through an intermediate; internal communication of two components or interaction relations between two components. For those of ordinary skill in the art, the specific meaning of the above-mentioned terms in the present disclosure can be understood according to specific circumstances.

Various embodiments or examples for implementing different structures of the present disclosure are provided in the present disclosure. In order to simplify the description of the present disclosure, components and arrangements of specific examples are described herein. These specific examples are merely for the purpose of illustration, rather than limiting the present disclosure. Further, the same reference numerals and/or reference letters may appear in different examples of the present disclosure for the purpose of simplicity and clarity, instead of indicating a relationship between different embodiments and/or the discussed arrangements. In addition, the present disclosure provides examples of various specific processes and materials. However, applications of other processes and/or the use of other materials are conceivable for those of ordinary skill in the art.

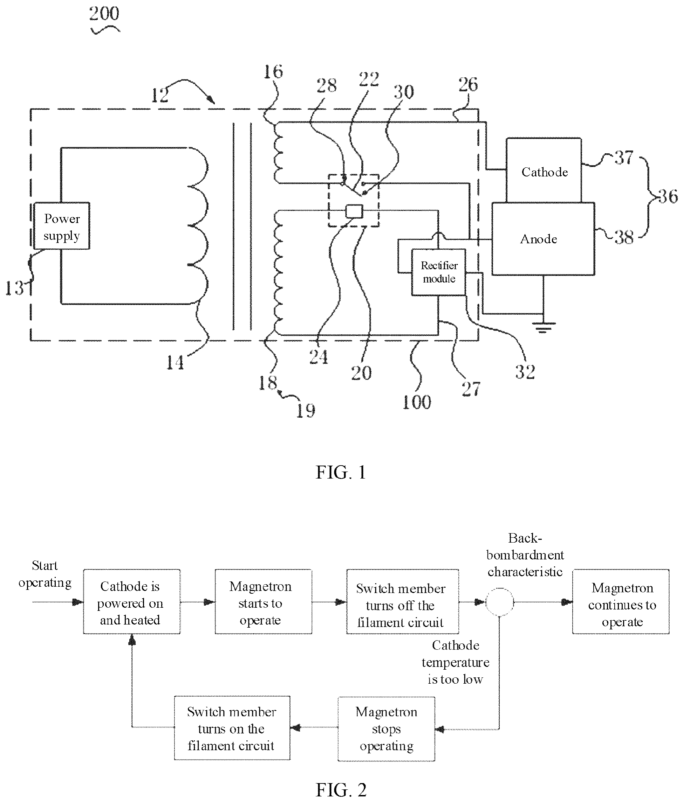

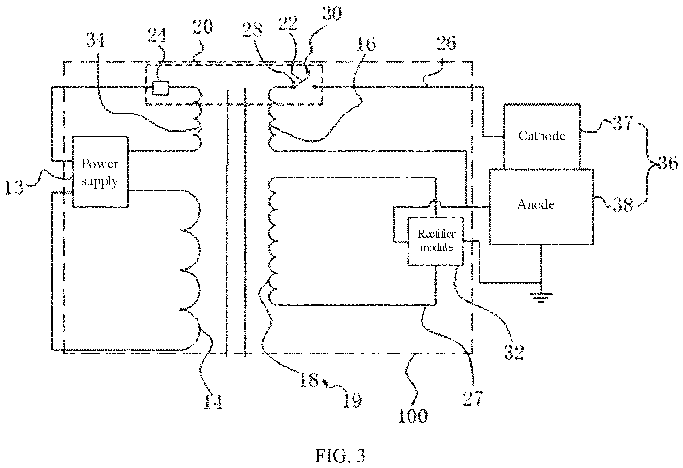

As illustrated in FIG. 1 and FIG. 3, a control circuit 100 according to embodiments of the present disclosure is applied to a microwave generation device 200. The microwave generation device 200 includes a magnetron 36. The control circuit 100 includes a transformer assembly 12 and a switch portion 20. The transformer assembly 12 includes a primary winding 14, a first secondary winding 16, and a second secondary winding 18. The primary winding 14 is located at a primary side of the transformer assembly 12. The first secondary winding 16 and the second secondary winding 18 are located at a secondary side of the transformer assembly 12. The first secondary winding 16 and a cathode 37 of the magnetron 36 form a filament circuit 26. The switch portion 20 includes a switch member 22 and a control member 24. The switch member 22 is located in the filament circuit 26. The control member 24 is electrically connected to a control winding 19. The control member 24 controls the switch member 22 to turn off or turn on the filament circuit 26 when a current in the control winding 19 changes. The control winding 19 is one of windings of the transformer assembly 12, and the control winding 19 and an anode 38 of the magnetron 36 form an anode circuit 27.

With the above control circuit 100, the control member 24 can control the switch member 22 to turn off the filament circuit 26 with the switch portion 20, in such a manner that the cathode 37 of the magnetron 36 can be powered off after enough electrons are generated through powering on. Therefore, the magnetron 36 can enable the cathode 37 to continue to generate the electrons through a back-bombardment characteristic. In this way, the magnetron 36 can continue to operate, which is beneficial to realizing an effect of separately turning on and turning off the cathode 37 of the magnetron 36, ensuring operation quality and a service life of the magnetron 36.

Specifically, the transformer assembly 12 has a primary side and a secondary side. The primary winding 14 is located at the primary side. The first secondary winding 16 and the second secondary winding 18 are located at the secondary side of the transformer assembly 12. The magnetron 36 can be electrically connected in the control circuit 100. The magnetron 36 can have the cathode 37 and the anode 38. The cathode 37 can be a filament of the magnetron 36. The first secondary winding 16 and the cathode 37 can form the filament circuit 26. In an embodiment, the control circuit 100 further includes a power source 13. The power source 13 can include an AC power source, and can be electrically connected to the primary winding 14 to form a circuit, causing a current in the primary winding 14 to change. In an embodiment, an inverter circuit can be electrically connected to the primary winding 14 to form a circuit that can supply power to the primary winding 14. The switch portion 20 includes a current transformer and is provided with the switch member 22 and the control member 24. The switch member 22 can be disposed in the filament circuit 26 and has a first end 28 and a second end 30. The first end 28 is movably connected to the filament circuit 26, and the second end 30 can turn off or turn on the filament circuit 26, achieving a control effect of separately turning on and turning off the filament circuit 26. The control member 24 can be electrically connected to the control winding 19 and the control winding 19 can be one of the windings in the transformer assembly 12. In an embodiment, the second secondary winding 18 and the anode 38 of the magnetron 36 form the filament circuit 27. After the microwave generation device 200 is powered on, the magnetron 36 can be preheated. After preheating of the magnetron 36 is complete, a current can be generated in the anode circuit 27. The control member 24 can control the switch member 22 to turn off or turn on the filament circuit 26 when the current in the control winding 19 changes. When the control member 24 controls the switch member 22 to turn off the filament circuit 26, the cathode 37 can be powered off after enough electrons are generated through powering on. Therefore, the magnetron 36 can enable the cathode 37 to continue to generate the electrons through the back-bombardment characteristic. In this way, the magnetron 36 can continue to operate, realizing an effect of separately turning on and turning off the filament circuit 26.

In some embodiments, referring to FIG.1, the control winding 19 includes the second secondary winding 18. The control member 24 controls the switch member 22 to turn off the filament circuit 26 when the current starts to pass through the second secondary winding 18 resulting in the change in the current. The control member 24 controls the switch member 22 to turn on the filament circuit 26 when the current stops passing through the second secondary winding 18 resulting in the change in the current.

In this way, the filament circuit 26 can be separately controlled to be turned on or turned off by the switch member 22.

Specifically, in an embodiment, the control member 24 can control the switch member 22 to turn off the filament circuit 26 when the current starts to pass through the second secondary winding 18 resulting in the change in the current. When the switch member 22 turns off the filament circuit 26, enough electrons are generated by the cathode 37 through powering on. Therefore, the magnetron 36 can enable the cathode 37 to continue to generate the electrons through the back-bombardment characteristic. In this way, the magnetron 36 can continue to operate. In an embodiment, the control member 24 can control the switch member 22 to turn on the filament circuit 26, when the current stops passing through the second secondary winding 18 resulting in the change in the current. In this way, the magnetron 36 can continue to operate. The anode 38 of the magnetron 36 can be electrically connected to the second secondary winding 18 to form a circuit. The filament circuit 26 is turned off or turned on by the switch member 22, in such a manner that the filament circuit 26 can be separately controlled to be turned on or turned off. In addition, in an example, there can be a preheating stage when the microwave generation device 200 is powered on. During the preheating stage, a temperature of the cathode 37 of the magnetron 36 can rise to a certain value, in such a manner that electrons can be emitted. During the preheating phase, voltages can be applied to both the cathode 37 and the anode 38, but no current flows through the circuit formed by an electrical connection between the anode 38 and the second secondary winding 18. After the preheating stage, the current starts to pass through the second secondary winding 18 resulting in the change in the current. The control member 24 can control the switch member 22 to turn off the filament circuit 26. Therefore, the magnetron 36 can enable the cathode 37 to continue to generate the electrons through the back-bombardment characteristic. In this way, the magnetron 36 can continue to operate.

In some embodiments, the current starts to pass through the second secondary winding 18 when the cathode 37 of the magnetron 36 has a temperature greater than or equal to a first predetermined temperature. The current stops passing through the second secondary winding 18 when the cathode 37 of the magnetron 36 has the temperature less than or equal to a second predetermined temperature. The second predetermined temperature is less than or equal to the first predetermined temperature.

In this way, self-feedback adjustment to the temperature of the cathode 37 of the magnetron 36 can be achieved.

Specifically, in an embodiment, the current starts to pass through the second secondary winding 18 when the cathode 37 of the magnetron 36 has the temperature greater than the first predetermined temperature. In an embodiment, the current starts to pass through the second secondary winding 18 when the cathode 37 of the magnetron 36 has the temperature equal to the first predetermined temperature. In an embodiment, the current stops passing through the second secondary winding 18 when the cathode 37 of the magnetron 36 has the temperature less than the second predetermined temperature. In an embodiment, the current stops passing through the second secondary winding 18 when the cathode 37 of the magnetron 36 has the temperature equal to the second predetermined temperature. In an embodiment, the first predetermined temperature ranges from 10K °C to 200K °C.

Referring to FIG. 2, in an example, when the temperature of the cathode 37 is too low to emit the electrons, the magnetron 36 stops operating, and no current flows through the circuit formed by the anode 38 of the magnetron 36 and the second secondary winding 18. The control member 24 controls the switch member 22 to turn on the filament circuit 26 when no current passes through the second secondary winding 18. In this way, the filament circuit 26 can continue to heat the cathode 37. When heated to a certain temperature, the cathode 37 can emit the electrons, and the magnetron 36 can continue to operate. When the magnetron 36 continues to operate, the current flows through the circuit formed by the anode 38 and the second secondary winding 18, and the control member 24 controls the switch member 22 to turn off the filament circuit 26 and stops heating the cathode 37, realizing the self-feedback adjustment to the temperature of the cathode 37 of the magnetron 36.

As illustrated in FIG. 3, in some embodiments, the control winding 19 includes an auxiliary winding 34 located at the primary side of the transformer assembly 12. The current passes through the auxiliary winding 34 synchronously resulting in a change in the current when the primary winding 14 is powered on. The control member 24 controls the switch member 22 to turn on the filament circuit 26 within a predetermined time length, and controls the switch member 22 to turn off the filament circuit 26 after the predetermined time length when the current starts to pass through the auxiliary winding 34 resulting in a change in the current.

In this way, the filament circuit 26 can be avoided to be powered on for a long time, which leads to high temperature, affecting the service life of the magnetron 36.

Specifically, the auxiliary winding 34 can be disposed at the primary side of the transformer assembly 12 and located at a same side as the primary winding 14. The auxiliary winding 34 and the primary winding 14 can be electrically connected to a same power supply 13. The current passes through the auxiliary winding 34 synchronously resulting in the change in the current when the primary winding 14 is powered on. The control member 24 can be electrically connected to the auxiliary winding 34 and form a circuit with the auxiliary winding 34. The control member 24 can be set with a predetermined time length. The control member 24 can control the switch member 22 to turn on the filament circuit 26 within the predetermined time length when the current starts to pass through the auxiliary winding 34 resulting in the change in the current. In this case, the second end 30 is connected to the filament circuit 26. The switch member 24 can control the switch member 22 to turn off the filament circuit 26 after the predetermined time length expires. In this case, the second end 30 is disconnected from the filament circuit 26. In addition, in an example, when a power-on operation starts, a voltage located at the primary side can be converted to the secondary side, providing a voltage required for operation of the magnetron 36. The cathode 37 and the anode 38 are powered on through the filament circuit 26 and a circuit in which the second secondary winding 18 is located, respectively. After the cathode 37 completes the preheating stage, the control member 24 can control the switch member 22 to turn off the filament circuit 26 according to a set predetermined time length. In an embodiment, the predetermined time length can be 8 seconds.

Referring to FIG. 1, in some embodiments, the control circuit 100 includes a rectifier module 32. The rectifier module 32 is electrically connected to the second secondary winding 18 and the anode 38 of the magnetron 36 and provides a direct current voltage to the magnetron 36.

In this way, an alternating voltage formed by the second secondary winding 18 can be converted into the direct current voltage.

Specifically, in an embodiment, the rectifier module 32 and the second secondary winding 18 can form a circuit. The anode 38 of the magnetron 36 and the rectifier module 32 can form a circuit. The rectifier module 32 can be electrically connected to the second secondary winding 18 and the anode 38 of the magnetron 36, in such a manner that the alternating voltage formed by the second secondary winding 18 can be converted into the direct current voltage, providing the direct current voltage to the magnetron 36.

As illustrated in FIG. 1, a microwave generation device 200 according to the embodiments of the present disclosure includes the magnetron 36, the control circuit 100, and the transformer assembly 12. The control circuit 100 includes the transformer assembly 12 and the switch portion 20. The transformer assembly 12 includes the primary winding 14, the first secondary winding 16, and the second secondary winding 18. The primary winding 14 is located at the primary side of the transformer assembly 12. The first secondary winding 16 and the second secondary winding 18 are located at the secondary side of the transformer assembly 12. The first secondary winding 16 and the cathode 37 of the magnetron 36 form the filament circuit 26. The switch portion 20 includes the switch member 22 and the control member 24. The switch portion is located in the filament circuit 26. The control member 24 is electrically connected to the control winding 19. The control member 24 is used to control the switch member 22 to turn off or turn on the filament circuit 26 when the current in the control winding 19 changes. The control winding 19 is one of windings of the transformer assembly 12, and the control winding 19 and the anode 38 of the magnetron 36 form the anode circuit 27.

With the above microwave generation device 200, the control member 24 can control the switch member 22 to turn off the filament circuit 26 with the switch portion 20, in such a manner that the cathode 37 of the magnetron 36 can be powered off after enough electrons are generated through powering on. Therefore, the magnetron 36 can enable the cathode 37 to continue to generate the electrons through the back-bombardment characteristic. In this way, the magnetron 36 can continue to operate, which is beneficial to realizing the effect of separately turning on and turning off the cathode 37 of the magnetron 36, ensuring the operation quality and the service life of the magnetron 36.

Specifically, the magnetron 36 can be electrically connected in the control circuit 100. The magnetron 36 can have the cathode 37 and the anode 38. The cathode 37 can be the filament of the magnetron 36. A detailed description of a principle of the control circuit 100 in this embodiment has been described above, and reference may be made to the detailed description of the principle of the control circuit 100 previously described.

Referring to FIG. 1, in some embodiments, the control winding 19 includes the second secondary winding 18. The control member 24 controls the switch member 22 to turn off the filament circuit 26 when the current starts to pass through the second secondary winding 18 resulting in the change in the current. The control member 24 controls the switch member 22 to turn on the filament circuit 26 when the current stops passing through the second secondary winding 18 resulting in the change in the current.

In this way, the filament circuit 26 can be separately controlled to be turned on or turned off by the switch member 22.

Specifically, the detailed description according to this embodiment has been described before, and reference may be made to the previous specific description according to this embodiment. After the microwave generation device 200 is powered on, the magnetron 36 can be preheated by oscillating. After a period of oscillation and operation, the current starts to pass through the second secondary winding 18 resulting in the change in the current, and the control member 24 can control the switch member 22 to turn off the filament circuit 26. The magnetron 36 can enable the cathode 37 to continue to keep high temperature and to generate the electrons through the back-bombardment characteristic. In this way, the magnetron 36 can continue to operate.

In some embodiments, the current starts to pass through the second secondary winding 18 when the cathode 37 of the magnetron 36 has the temperature greater than or equal to the first predetermined temperature. The current stops passing through the second secondary winding 18 when the cathode 37 of the magnetron 36 has the temperature less than or equal to the second predetermined temperature. The second predetermined temperature is less than or equal to the first predetermined temperature.

In this way, the self-feedback adjustment to the temperature of the cathode 37 of the magnetron 36 can be achieved.

Specifically, the detailed description according to this embodiment has been described before, and reference may be made to the previous specific description according to this embodiment.

Referring to FIG. 3, in some embodiments, the control winding 19 includes the auxiliary winding 34 located at the primary side of the transformer assembly 12. The current passes through the auxiliary winding 34 synchronously resulting in the change in the current when the primary winding 14 is powered on. The control member 24 controls the switch member 22 to turn on the filament circuit 26 within a predetermined time length, and controls the switch member 22 to turn off the filament circuit 26 after the predetermined time length when the current starts to pass through the auxiliary winding 34 resulting in the change in the current.

In this way, the filament circuit 26 can be avoided to be powered on for a long time, which leads to high temperature, affecting the service life of the magnetron 36.

Specifically, the detailed description according to this embodiment has been described before, and reference may be made to the previous specific description according to this embodiment.

Referring to FIG. 1, in some embodiments, the control circuit 100 includes the rectifier module 32. The rectifier module 32 is electrically connected to the second secondary winding 18 and the anode 38 of the magnetron 36 and provides the direct current voltage to the magnetron 36.

In this way, the alternating voltage formed by the second secondary winding 18 can be converted into the direct current voltage.

Specifically, the specific description of this embodiment has been described before, and reference may be made to the previous specific description of this embodiment.

In the description of this specification, descriptions with reference to the terms "an embodiment", "some embodiments", "certain embodiments", "illustrative embodiments", "an example", "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

Although embodiments of the present disclosure have been illustrated and described, it is conceivable for those of ordinary skill in the art that various changes, modifications, replacements, and variations can be made to these embodiments without departing from the principles and spirit of the present disclosure. The scope of the present disclosure shall be defined by the claims as appended and their equivalents.

## Claims

1. A control circuit, applied to a microwave generation device comprising a magnetron, wherein the control circuit comprises:
a transformer assembly comprising a primary winding, a first secondary winding, and a second secondary winding, the primary winding being located at a primary side of the transformer assembly, the first secondary winding and the second secondary winding being located at a secondary side of the transformer assembly, the first secondary winding and a cathode of the magnetron forming a filament circuit; and
a switch portion comprising a switch member and a control member, the switch member being located in the filament circuit, the control member being electrically connected to a control winding and configured to control the switch member to turn off or turn on the filament circuit when a current in the control winding changes, and the control winding being one of windings of the transformer assembly, and the control winding and an anode of the magnetron forming an anode circuit.

2. The control circuit according to claim 1, wherein:
the control winding comprises the second secondary winding;
the control member is configured to control the switch member to turn off the filament circuit when a current starts to pass through the second secondary winding resulting in a change in the current; and
the control member is configured to control the switch member to turn on the filament circuit when a current stops passing through the second secondary winding resulting in a change in the current.

3. The control circuit according to claim 1 or claim 2, wherein:
the current starts to pass through the second secondary winding when the cathode of the magnetron has a temperature greater than or equal to a first predetermined temperature;
the current stops passing through the second secondary winding when the cathode of the magnetron has the temperature less than or equal to a second predetermined temperature; and
the second predetermined temperature is less than or equal to the first predetermined temperature.

4. The control circuit according to any one of claims 1 to 3, wherein:
the control winding comprises an auxiliary winding located at the primary side of the transformer assembly;
the current passes through the auxiliary winding synchronously resulting in a change in the current when the primary winding is powered on; and
the control member is configured to control the switch member to turn on the filament circuit within a predetermined time length, and control the switch member to turn off the filament circuit after the predetermined time length when the current starts to pass through the auxiliary winding resulting in a change in the current.

5. The control circuit according to any one of claims 1 to 4, comprising a rectifier module electrically connected to the second secondary winding and the anode of the magnetron and configured to provide a direct current voltage to the magnetron.

6. A microwave generation device, comprising:
a magnetron; and
a control circuit, wherein the control circuit comprises:
a transformer assembly comprising a primary winding, a first secondary winding, and a second secondary winding, the primary winding being located at a primary side of the transformer assembly, the first secondary winding and the second secondary winding being located at a secondary side of the transformer assembly, the first secondary winding and a cathode of the magnetron forming a filament circuit; and
a switch portion comprising a switch member and a control member, the switch member being located in the filament circuit, the control member being electrically connected to a control winding and configured to control the switch member to turn off or turn on the filament circuit when a current in the control winding changes, and the control winding being one of windings of the transformer assembly, and the control winding and an anode of the magnetron forming an anode circuit.

7. The microwave generation device according to claim 6, wherein:
the control winding comprises the second secondary winding;
the control member is configured to control the switch member to turn off the filament circuit when a current starts to pass through the second secondary winding resulting in a change in the current; and
the control member is configured to control the switch member to turn on the filament circuit when a current stops passing through the second secondary winding resulting in a change in the current.

8. The microwave generation device according to claim 6 or claim 7, wherein:
the current starts to pass through the second secondary winding when the cathode of the magnetron has a temperature greater than or equal to a first predetermined temperature;
the current stops passing through the second secondary winding when the cathode of the magnetron has the temperature less than or equal to a second predetermined temperature; and
the second predetermined temperature is less than or equal to the first predetermined temperature.

9. The microwave generation device according to any one of claims 6 to 8, wherein:
the control winding comprises an auxiliary winding located at the primary side of the transformer assembly;
the current passes through the auxiliary winding synchronously resulting in a change in the current when the primary winding is powered on; and
the control member is configured to control the switch member to turn on the filament circuit within a predetermined time length, and control the switch member to turn off the filament circuit after the predetermined time length when the current starts to pass through the auxiliary winding resulting in a change in the current.

10. The microwave generation device according to any one of claims 6 to 9, wherein the control circuit comprises a rectifier module electrically connected to the second secondary winding and the anode of the magnetron and configured to provide a direct current voltage to the magnetron.
